# EUROPEAN PATENT SPECIFICATION

(11) **EP 2 908 486 B1**
(45) Date of publication and mention of the grant of the patent: **02.05.2018**
(21) Application number: 13844911.1
(22) Date of filing: 30.08.2013
(51) Int. Cl.: H04L 12/911, H04L 12/709, H04L 12/701

(54) **AGGREGATION PORT ID ALLOCATION METHOD AND DEVICE**
AGGREGATIONS-PORT-ID-ZUWEISUNGSVERFAHREN UND -VORRICHTUNG
PROCÉDÉ ET DISPOSITIF D'ATTRIBUTION D'IDENTIFIANTS DE PORTS D'AGRÉGATION

(30) Priority: 12.10.2012 CN 201210387281
(43) Date of publication of application: 19.08.2015
(73) Proprietor: ZTE Corporation, Shenzhen, Guangdong 518057 (CN)
(72) Inventor: GUO, Zhui, Shenzhen Guangdong 518057 (CN); YU, Jinghai, Shenzhen Guangdong 518057 (CN)
(74) Representative: Mozzi, Matteo
(86) International application number: PCT/CN2013/082699
(87) International publication number: WO 2014/056367

(56) References cited:
- WO-A1-2008/009160
- CN-A- 102 404 102
- CN-A- 102 428 679
- US-A1- 2012 033 541
- "Multiple Systems Link Aggregation Control Protocol ; bq-rick-van-t-spijker-mslacp-final-31-05-2 010-1104", IEEE DRAFT; BQ-RICK-VAN-T-SPIJKER-MSLACP-FINAL-31-05-2 010-1104, IEEE-SA, PISCATAWAY, NJ USA, vol. 802.1, 7 April 2011 (2011-04-07), pages 1-78, XP068008118, [retrieved on 2011-04-07]
- "IEEE Std 802.1AX (TM) -2008 IEEE Standard for Local and metropolitan area networks-", , 3 November 2008 (2008-11-03), pages 1-163, XP055216396, 3 Park Avenue, New York, NY 10016-5997, USA Retrieved from the Internet: URL:http://standards.ieee.org/getieee802/d ownload/802.1AX-2008.pdf [retrieved on 2015-09-28]

## Description

### Technical Field

The present invention relates to the field of communications, and in particular to a method and device for allocating an aggregation port Identifiers (ID).

### Backaround

Ethernet link aggregation, called link aggregation for short, bundles multiple Ethernet physical links into a logic link, thereby fulfilling the aim of increasing a link bandwidth. Meanwhile, by virtue of dynamic backup among these bundled links, the reliability of the links may be effectively improved.

A Link Aggregation Control Protocol (LACP) is an Institute of Electrical and Electronic Engineers 802.ad (IEEE802.3ad)-standard-based protocol capable of realizing the dynamic aggregation and deaggregation of the links, and usually performs information interaction with an opposite end through a Link Aggregation Control Protocol Data Unit (LACPDU).

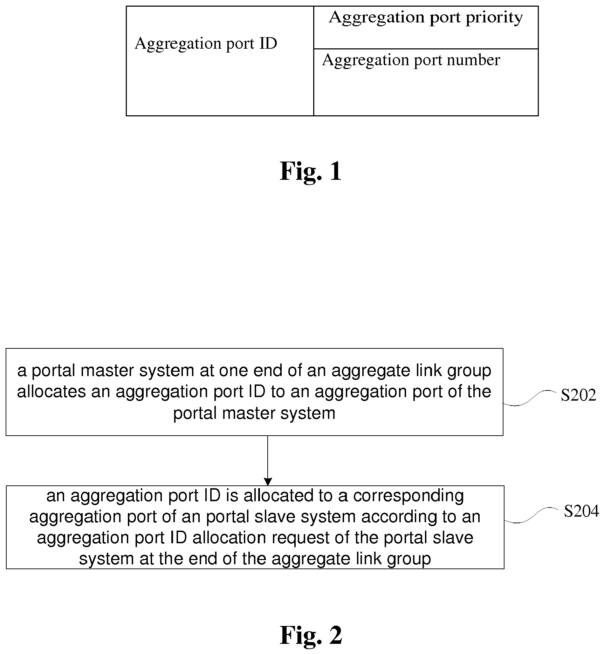

Fig. 1 shows a division format of an LACPDU message according to a related art. An aggregation port ID consists of an aggregation port priority (Actor_Port_Priority) and an aggregation port number (Actor_Port), two high-order bytes form the aggregation port priority, and two low-order bytes form the aggregation port number.

Conventional IEEE802.1AX-based link aggregation may protect multiple links, but is limited to support port aggregation on one system, so that conventional IEEE802.1AX-based link aggregation can be used for link protection only, and a portal system cannot be protected by a current link aggregation technology on an edge interface of a network. Therefore, an IEEE802.1 working team sets up a project about a distributed link aggregation technology, that is, one or more portal systems form a logic portal system for link aggregation, and multiple links on multiple portal systems are aggregated into an aggregate group, thereby realizing dual-redundancy network interconnection protection over the links and the portal systems.

In the link aggregation technology, a key technical factor is the allocation of aggregation port IDs which function in determining states of ports at two ends according to the magnitude of the port IDs of the end with a superior equipment ID in the systems at the two ends during the negotiation of the systems at a local end and the opposite end. In an LACP system, the aggregation port IDs are allocated by the system in a unified way, and each physical port has a unique ID which is not repeated with those of other aggregation ports; and in a distributed link aggregation system, two or more portal systems can exist in one system, and in order to ensure the uniformity of aggregation port ID allocation, a method capable of realizing the unified allocation of ports to ensure the uniqueness of the aggregation port IDs is required, and is required to be compatible with the LACP.

For the problems of aggregation port ID allocation in the related art, there are yet no effective solution.

Document Multiple Systems Link Aggregation Control Protocol; bq-rick-van-t-spijker-mslacp-final-31-05-2010-1104", IEEE DRAFT; BQ-RICK-VAN-T-SPIJKER-MSLACP-FINAL-31-05-2010-1104., IEEE-SA, PISCATAWAY, NJ LJSA, vol. 802.1, 7 April 2011, pages 1-78, XP088008118, describes a protocol to enhance the standard for link aggregation as defined by IEEE standard to support aggregation of links across multiple systems.

Document US 2012/0033541 A1 discloses a system and method for transport control protocol in a multi-chassis domain.

### Summary

The embodiment of the present invention provides a method and device for allocating aggregation port IDs, so as to at least solve the problems.

According to one aspect of the embodiment of the present invention, a method for allocating aggregation port IDs is provided, including that: a portal master system at one end of an link aggregation group allocates an aggregation port ID to an aggregation port of the portal master system, and allocates an aggregation port ID to a corresponding aggregation port of a portal slave system according to an aggregation port ID allocation request from the portal slave system at the end of the link aggregation group.

Preferably, after the portal master system allocates the aggregation port ID to the corresponding aggregation port of the portal slave system, the method further includes that: the portal slave system checks whether the allocated aggregation port ID is valid or not, and notifies a check result to the portal master system.

Preferably, before the portal master system at one end of the link aggregation group allocates the aggregation port ID to the aggregation port of the portal master system, the method further includes that: multiple portal systems at the end of the link aggregation group negotiate to determine the portal master system and portal slave systems; or the portal master system and the portal slave systems at the end of the link aggregation group are determined according to pre-configuration.

Preferably, that the portal master system allocates the aggregation port ID to the corresponding aggregation port of the portal slave system according to the aggregation port ID allocation request from the portal slave system includes that: the portal master system receives the aggregation port ID allocation request from the portal slave system; the portal master system allocates the aggregation port ID to the corresponding aggregation port of the portal slave system according to the aggregation port ID allocation request; and the portal master system transmits the allocated aggregation port ID to the portal slave system.

Preferably, under the condition that the aggregation port ID allocation request carries a local aggregation port ID which is allocated to the aggregation port of the portal slave system by the portal slave system, the portal master system transmitting the allocated aggregation port ID to the portal slave system includes that: a corresponding relationship between the aggregation port ID and the local aggregation port ID is established; and the aggregation port ID and the corresponding relationship are transmitted to the portal slave system.

Preferably, after the portal master system allocates the aggregation port ID to the corresponding aggregation port of the portal slave system according to the aggregation port ID allocation request from the portal slave system, the method further includes that: under the condition that an Intra-Portal Link (IPL) of between portal master system and the portal slave system is disconnected, if the portal slave system is isolated, the portal systems in an aggregate state reserve the aggregation port ID of its aggregation port.

Preferably, after the portal master system allocates the aggregation port ID to the corresponding aggregation port of the portal slave system according to the aggregation port ID allocation request of the portal slave system, the method further includes that: under the condition that the IPL of the portal master system and the portal slave system is disconnected, if the portal master system is isolated, the portal slave systems renegotiate to determine another portal master system to reallocate aggregation port IDs for the portal systems in the aggregate state.

Preferably, after the portal master system allocates the aggregation port ID to the corresponding aggregation port of the portal slave system according to the aggregation port ID allocation request of the portal slave system, the method further includes that: the portal master system receives a port removal request from the portal slave system, wherein the port removal request carries an aggregation port ID to be removed; and the portal master system reclaims the aggregation port ID to be removed according to the port removal request.

According to another aspect of the embodiment of the present invention, a method for allocating aggregation port IDs is provided, including that: a portal system at one end of a link aggregation group allocates an aggregation port ID to an aggregation port of the portal system according to a portal system ID and an aggregation port number.

Preferably, the portal system at one end of the link aggregation group allocating the aggregation port ID to the aggregation port of the portal system according to the portal system ID and the aggregation port number includes that: the portal system at one end of the link aggregation group allocates the aggregation port ID to the aggregation port of the portal system according to a port priority, the portal system ID and the aggregation port number.

Preferably, after the portal system at one end of the link aggregation group allocates the aggregation port ID to the aggregation port of the portal system according to the portal system ID and the aggregation port number, the method further includes that: the portal system notifies the allocated aggregation port ID to other portal systems at the end of the link aggregation group.

According to another aspect of the embodiment of the present invention, a device for allocating aggregation port IDs is provided, including an allocation component, configured to allocate an aggregation port ID to an aggregation port of a portal master system at one end of an link aggregation group and allocate an aggregation port ID to a corresponding aggregation port of a portal slave system according to an aggregation port ID allocation request of the portal slave system at the end of the link aggregation group.

Preferably, the device further includes: a processing component configured to check whether the aggregation port ID allocated by the portal master system is valid or not and notify a check result to the portal master system.

Preferably, the processing component is further configured to, under the condition that the portal master system receives a port removal request from the portal slave system, reclaim an aggregation port ID to be removed according to the port removal request, wherein the port removal request carries the aggregation port ID to be removed.

According to another aspect of the embodiment of the present invention, a device for allocating aggregation port IDs is provided, including a port ID allocation component, configured to allocate an aggregation port ID to an aggregation port of a portal system at one end of a link aggregation group according to a portal system ID and an aggregation port number.

Preferably, the port ID allocation component is further configured to allocate the aggregation port ID to the aggregation port of the portal system according to an aggregation port priority, the portal system ID and the aggregation port number.

Preferably, the device further includes: a notification component, configured to notify the allocated aggregation port ID to other portal systems at the end of the link aggregation group.

By the embodiment of the present invention, the problems of aggregation port ID allocation in the link aggregation group in the related art are solved, and an effect of realizing unified allocation to ensure the uniqueness of the aggregation port ID is further achieved.

### Brief Description of the Drawings

The drawings are described here to provide further understanding of the present invention, and form a part of the present invention. The schematic embodiments and description of the present invention are adopted to explain the present invention, and do not form improper limits to the present invention. In the drawings:
Fig. 1 is a division format of an LACPDU message according to a related art;
Fig. 2 is a first flowchart of a method for allocating aggregation port IDs according to an embodiment of the present invention;
Fig. 3 is a first structure diagram of a device for allocating aggregation port IDs according to an embodiment of the present invention;
Fig. 4 is a second structure diagram of a device for allocating aggregation port IDs according to an embodiment of the present invention;
Fig. 5 is a first flowchart of a method for allocating aggregation port IDs according to a preferred embodiment of the present invention;
Fig. 6 is a second flowchart of a method for allocating aggregation port IDs according to a preferred embodiment of the present invention;
Fig. 7a is a system structure diagram of a multi-portal system link aggregation group according to an embodiment of the present invention;
Fig. 7b is a third flowchart of a method for allocating aggregation port IDs according to a preferred embodiment of the present invention; and
Fig. 8 is a fourth flowchart of a method for allocating aggregation port IDs according to a preferred embodiment of the present invention.

### Detailed Description of the Embodiments

The present invention is described below with reference to the drawings and embodiments in detail. It is important to note that the embodiments of the present invention and the characteristics in the embodiments can be combined under the condition of no conflicts.

### Embodiment 1

An embodiment of the present invention provides a method for allocating aggregation port IDs. Fig. 2 is a first flowchart of a method for allocating aggregation port IDs according to an embodiment of the present invention, and as shown in Fig. 2, the flow includes the following steps.
S202: a portal master system at one end of an link aggregation group allocates an aggregation port ID to an aggregation port of the portal master system; and
S204: an aggregation port ID is allocated to a corresponding aggregation port of a portal slave system according to an aggregation port ID allocation request from the portal slave system at the end of the link aggregation group.

By the steps, the portal master system at one end of the link aggregation group allocates the aggregation port IDs in a unified way to realize the unified allocation of the aggregation port IDs and further ensure the uniqueness of the aggregation port IDs.

After the portal master system transmits the allocated aggregation port ID to the portal slave system, preferably, the portal slave system can check whether the allocated aggregation port ID is valid or not, and notifies a check result to the portal master system. By the step, the portal slave system checks the aggregation port ID, and the condition that communication cannot be established because the aggregation port does not have an available aggregation port ID when the allocated aggregation port ID is invalid is avoided.

There are many ways for determining the portal master system and portal slave systems, and preferably, multiple portal systems at one end of the link aggregation group may negotiate to determine the portal master system and the portal slave systems, or the portal master system and the portal slave systems at one end of the link aggregation group can be determined according to pre-configuration. By the step, the portal master system and the portal slave systems may be determined.

The portal master system may directly allocate aggregation port IDs to all the portal systems, and may also allocate the aggregation port ID to the portal slave system transmitting the request after receiving the aggregation port ID allocation request. Preferably, the aggregation port ID may be allocated to the aggregation port of the portal slave system according to the aggregation port ID allocation request after the aggregation port ID allocation request from the portal slave system is received, and the allocated aggregation port ID is transmitted to the portal slave system. In this way, the portal slave system may request for the allocation of the aggregation port ID under the condition that the aggregation port ID is required, so that the waste of an aggregation port ID resource is avoided.

Under the condition that the portal master system receives the aggregation port ID allocation request from the portal slave system, preferably, the aggregation port ID allocation request carries a local aggregation port ID allocated to the aggregation port of the portal slave system by the portal slave system. Preferably, a corresponding relationship between the aggregation port ID and the local aggregation port ID may be established, and the aggregation port ID and the corresponding relationship are transmitted to the portal slave system. By the above steps, the portal master system associates the aggregation port ID with the aggregation port of the portal slave system, and under the condition that multiple aggregation ports of the portal slave system require aggregation port IDs, the portal slave system may transmit the received aggregation port IDs to the corresponding aggregation ports according to the corresponding relationship.

After the portal master system allocates the aggregation port IDs to the aggregation ports of the portal master system and the portal slave system, if an between the portal master system and the portal slave system is disconnected, there are many processing ways for the portal master system and the portal slave system. Preferably, the following two ways may be included:
the first way is that, if the portal slave system is isolated, the portal master system in an aggregate state reserves the aggregation port ID of its aggregation port, and the portal slave systems in the aggregate state also reserve its aggregation port ID; and
the second way is that, if the portal master system is isolated, the portal slave systems renegotiate to determine another portal master system to reallocate aggregation port IDs to aggregation ports of the portal systems.

By the steps, under the condition that the is disconnected, the portal systems may perform corresponding processing according to different conditions, so that a link resource is further saved.

After the portal master system allocates the aggregation port IDs to the aggregation ports of the multiple portal systems, preferably, the portal master system reclaims an aggregation port ID to be removed after receiving a port removal request from the portal slave system, wherein the port removal request carries the aggregation port ID to be removed. By the step, an effect of effectively utilizing finite aggregation port IDs may be achieved.

### Embodiment 2

An embodiment of the present invention also provides a method for allocating aggregation port ID, the method specifically including that: a portal system at one end of a link aggregation group allocates aggregation port IDs to aggregation ports of the portal system according to portal system IDs and aggregation port numbers respectively.

Preferably, that the portal system at one end of the link aggregation group allocates the aggregation port IDs to the aggregation ports of the portal system according to the portal system IDs and the aggregation port numbers includes that: the portal system at one end of the link aggregation group allocates the aggregation port IDs to the aggregation ports of the portal system according to port priority, the portal system IDs and the aggregation port numbers.

Preferably, after the portal system at one end of the link aggregation group allocates the aggregation port IDs to the aggregation ports of the portal system according to the portal system IDs and the aggregation port numbers, the method further includes that: the portal system notifies the allocated aggregation port IDs to other portal systems at the end of the link aggregation group.

### Embodiment 3

The embodiment of the present invention also provides a device for allocating aggregation port IDs, which is configured to implement the embodiments and preferred embodiments, and what has been described will not be repeated. For example, a term component, used below, is a combination of software and/or hardware capable of realizing preset functions. The device described in the following embodiments is preferably implemented by software, but the implementation of the device with hardware or the combination of software and hardware is also possible and conceived.

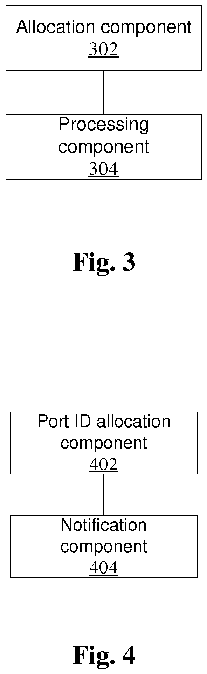

Fig. 3 is a first structure diagram of a device for allocating aggregation port IDs according to an embodiment of the present invention, and as shown in Fig. 3, the device includes an allocation component 302.

The allocation component 302 is configured to allocate an aggregation port ID to an aggregation port of a portal master system at one end of an link aggregation group and allocate an aggregation port ID to a corresponding aggregation port of a portal system slave according to an aggregation port ID allocation request from the portal slave system at the end of the link aggregation group.

Preferably, the device further includes: a processing component 304 configured to check whether the aggregation port ID allocated by the portal master system is valid or not and notify a check result to the portal master system.

Preferably, the processing component 304 is further configured to, under the condition that the portal master system receives a port removal request from the portal slave system, reclaim an aggregation port ID to be removed according to the port removal request, wherein the port removal request carries the aggregation port ID to be removed.

In the preferred implementation of the embodiment of the present invention, each component of the device can be combined to realize a corresponding function according to the method in embodiment 1, the same beneficial effects are achieved, and the embodiment of the present invention will not be specifically repeated.

### Embodiment 4

The embodiment of the present invention also provides a device for allocating aggregation port IDs. Fig. 4 is a second structure diagram of a device for allocating aggregation port IDs according to an embodiment of the present invention, and as shown in Fig. 4, the device includes a port ID allocation component 402.

The port ID allocation component 402 is configured to allocate aggregation port IDs to a plurality of aggregation ports of a portal system according to portal system IDs and aggregation port numbers.

Preferably, the port ID allocation component 402 is further configured to allocate the aggregation port IDs to the aggregation ports of the portal system according to aggregation port priority, the portal system IDs and the aggregation port numbers.

Preferably, the device further includes a notification component 404 configured to notify the allocated aggregation port ID to other portal systems at the end of a link aggregation group.

In the preferred implementation of the embodiment of the present invention, each component of the device can be combined to realize a corresponding function according to the method in embodiment 2, the same beneficial effects are achieved, and the embodiment of the present invention will not be specifically repeated.

### Embodiment 5

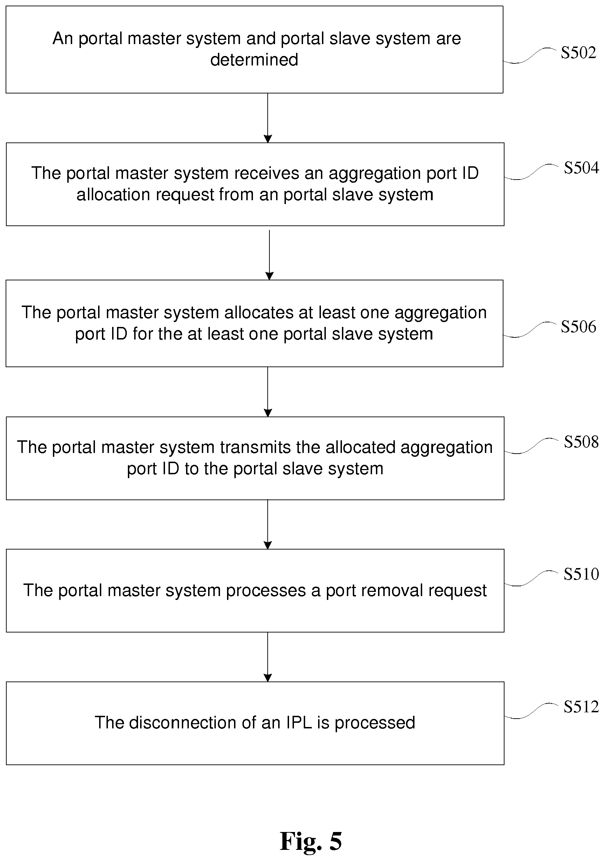

Fig. 5 is a first flowchart of a method for allocating aggregation port IDs according to a preferred embodiment of the present invention, and as shown in Fig. 5, the flow includes the following steps that:
S502: a portal master system and at least one portal slave system are determined.

Each portal system in one end of a link aggregation group negotiates about the portal master system and the at least one portal slave system to determine the portal master system and the at least one portal slave system. A specific method for negotiating about the portal master system and the portal slave system is provided in the prior art, and will not be repeated here.
S504: the portal master system receives an aggregation port ID allocation request from a portal slave system.

After the portal master system and the portal slave system are determined, aggregation port IDs are allocated by the portal master system in a unified way. The portal slave system transmits the aggregation port ID allocation request to the portal master system after discovering an aggregation port, and the aggregation port ID allocation request carries a local aggregation port ID allocated to the aggregation port by the portal slave system. A notification protocol between the portal systems may realize information interaction through a specific protocol, and may be a Distributed Relay Control Protocol (DRCP). Information about conditions of each portal system and the other portal system connected therewith may be carried in the protocol through a protocol message.
S506: the portal master system allocates at least one aggregation port ID for the portal slave system.

The portal master system allocates an aggregation port ID for the portal slave system after receiving the aggregation port ID allocation request, and stores a corresponding relationship between the local aggregation port ID carried in the aggregation port ID allocation request and the allocated aggregation port ID. If the request carries multiple local aggregation port IDs, it shows that the portal slave system has multiple aggregation ports which require the allocation of aggregation port IDs, so that the portal master system should allocate multiple aggregation port IDs for the portal slave system according to the local aggregation port IDs.
S508: the portal master system transmits the at least one allocated aggregation port ID to the portal slave system.

The portal master system returns the at least one aggregation port ID to the portal slave system through an aggregation port ID allocation response message, thereby enabling the aggregation port of the portal slave system to acquire the at least one aggregation port ID.
S510: the portal master system processes a port removal request.

When an aggregation port in the portal slave system is deleted from the link aggregation group, the portal slave system needs to notify port removal information to the portal master system. After receiving the port removal request from the portal slave system, the portal master system reclaims the aggregation port ID, and the reclaimed aggregation port ID may be reserved for the port rather than being allocated to another port, and may also be allocated to another port. If being reserved, the reclaimed aggregation port ID is reallocated to the aggregation port by the portal master system when the removed aggregation port is added into the link aggregation group again.
S512: the disconnection of an is processed.

Under the condition that the between the portal master system and the portal slave system is disconnected, if the portal slave system is isolated, the portal master system in an aggregate state reserves the aggregation port ID of its aggregation port, and simultaneously deletes the corresponding relationship between the local aggregation port ID and the aggregation port ID; and if the portal master system is isolated, the portal slave system renegotiates to determine another portal master system to reallocate aggregation port IDs to the aggregation ports of the portal system in the aggregate state.

### Embodiment 6

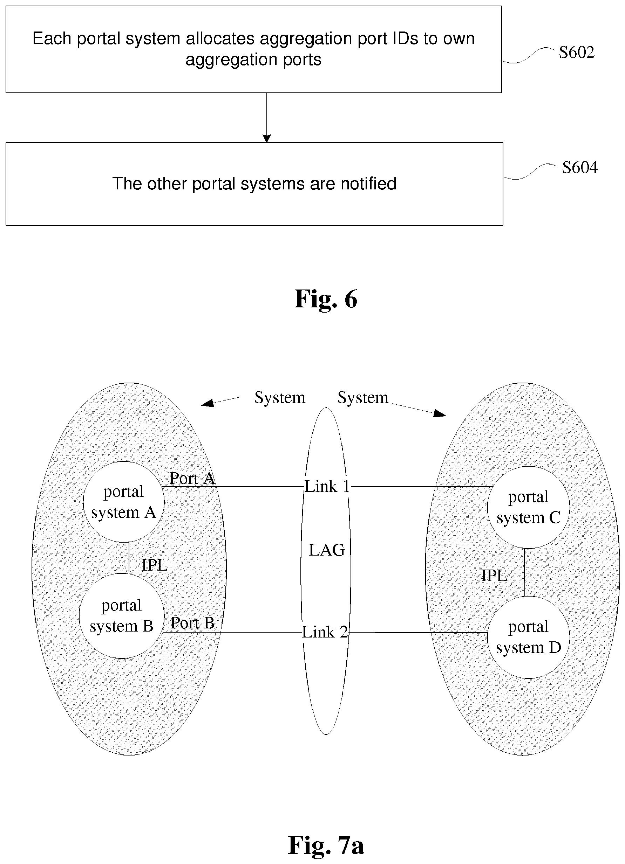

Fig. 6 is a second flowchart of a method for allocating aggregation port IDs according to a preferred embodiment of the present invention, and as shown in Fig. 6, the flow includes the following steps.
S602: each portal system allocates aggregation port IDs to its own aggregation ports.

In the related art, the aggregation port ID consists of an aggregation port priority (Actor_Port_Priority) and an aggregation port number (Actor_Port), two high-order bytes form the aggregation port priority, and two low-order bytes form the aggregation port number. In the embodiment, the uniqueness of the port number is ensured by including a portal system ID in the aggregation port number, wherein the portal system ID is represented by 3 bits which may be configured by a manager, and may also be generated by another ID of the system. Specifically, high-order bits in the aggregation port number are used for storing the ID of the portal system where the aggregation port is located, low-order bits in the aggregation port number are used for storing the aggregation port number, and in such a way, the aggregation port number allocated by each portal system is defined within a range, so that the repetition of the port number allocated by each portal system in an link aggregation group is avoided.
S604: the other portal systems are notified.

The generated aggregation port IDs are notified to the other portal systems at one end of the link aggregation group.

When the portal systems lose touch with the other portal systems, the aggregation port IDs are recovered into a default state. If the aggregation port IDs are required to be sequenced, the aggregation port IDs may be sequenced by changing port priorities or preferably and reasonably allocating the portal system IDs.

### Embodiment 7

Fig. 7a is a system structure diagram of a multi-portal system link aggregation group according to an embodiment of the present invention. As shown in Fig. 7a, one end of the link aggregation group consists of two portal systems A and B, which are connected through an IPL, thereby forming one end of the distributed link aggregation group, and similarly, two portal systems C and D form the other end of the link aggregation group. The portal system A is connected with the portal system C through a port A, and a link between the portal systems A and C is link 1; and the portal system B is connected with the portal system D through a port B, and a link between the portal systems B and D is link 2. For example, in Fig. 7a, a portal master system and a portal slave system may be determined by configuration or negotiation, wherein the portal system A is the portal master system, and the portal system B is the portal slave system.

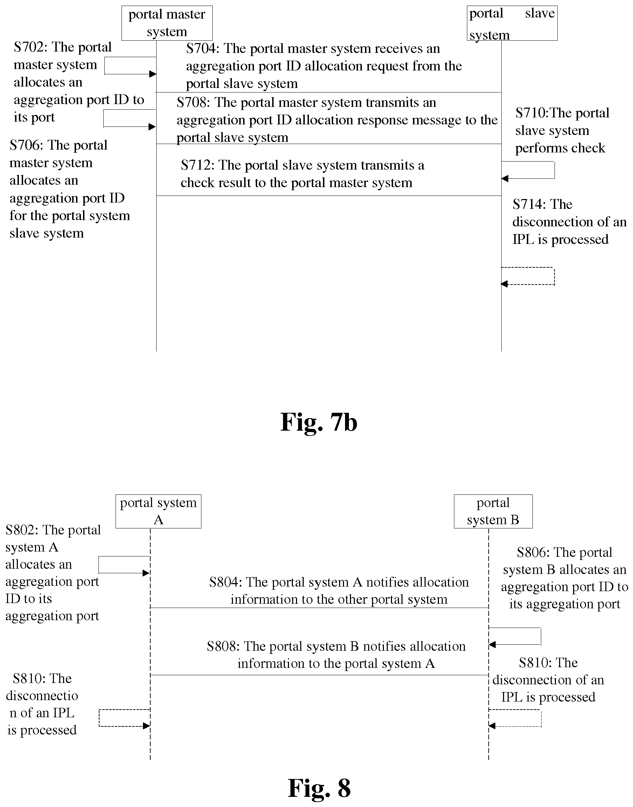

Fig. 7b is a third flowchart of a method for allocating aggregation port IDs according to a preferred embodiment of the present invention, and as shown in Fig. 7b, the flow includes the following steps.
S702: a portal master system allocates an aggregation port ID to its port.

The portal master system A allocates an aggregation port ID to port A, which is added into a link aggregation group, of the portal master system A. In the embodiment, if an aggregation port number is 1, and stored port information is as follows:

| Portal system ID | Aggregation port ID | | Local aggregation port ID | |
|---|---|---|---|---|
| A | Priority | 1 | Priority | Port A |

S704: the portal master system receives an aggregation port ID allocation request from a portal slave system.

Port B of the portal slave system is added into the link aggregation group, and the portal slave system initiates the aggregation port ID allocation request to the portal master system, for example, a Type-Length-Value (TLV) format in the following table is adopted:

| Type | Length | Portal system ID | Aggregation port ID | | Local aggregation port ID | |
|---|---|---|---|---|---|---|
| 0x1 | Length | B | Priority | 0 | Priority | Port B |

When the portal slave system has multiple aggregation ports requesting for aggregation port ID allocation to the portal master system, an aggregation port ID with a value 0 and multiple local aggregation port IDs may be carried in the aggregation port ID allocation request.
S706: the portal master system allocates an aggregation port ID for the portal system slave system.

After receiving the aggregation port ID allocation request, the portal master system performs aggregation port ID allocation check, and if the portal master system determines that there is no available aggregation port ID for allocation, the aggregation port ID included in a response message is 0; otherwise an available aggregation port ID is allocated to the portal slave system.
S708: the portal master system transmits the aggregation port ID allocation response message to the portal slave system.

If the port number allocated by the portal master system is 2, a message format of the response message transmitted to the portal slave system by the portal master system is as follows:

| Type | Length | Portal system ID | Aggregation port ID | | Local aggregation port ID" | |
|---|---|---|---|---|---|---|
| ,0x2 | Length | B | Priority | 2 | Priority | Port B |

If multiple aggregation port IDs are simultaneously allocated to the portal slave system, a combination of the multiple aggregation port IDs and the local aggregation port IDs may be carried in the response message. After the aggregation port IDs are successfully allocated, the portal master system stores the port information:

| Portal system ID | Aggregation port ID | | Local aggregation port ID" | |
|---|---|---|---|---|
| A | Priority | 1 | Priority | Port A |
| B | Priority | 2 | Priority | Port B |

S710: the portal slave system performs check.

After receiving the response message, the portal slave system acquires the allocated aggregation port ID, and performs validity check. If the newly allocated aggregation port ID in the response message and currently stored aggregation port IDs of the other ports of the portal slave system are repeated, the allocated aggregation port ID is invalid; otherwise the allocated aggregation port ID is valid.
S712: the portal slave system transmits a check result to the portal master system.

The portal slave system transmits an acknowledgement message to the portal master system if determining that the allocated aggregation port ID is valid, and stores port allocation information:

| Portal system ID | Aggregation port ID | | Local aggregation port ID" | |
|---|---|---|---|---|
| B | Priority | 2 | Priority | Port B |

Under the condition that the portal slave system determines that the aggregation port ID is invalid, the portal slave system retransmits an error indication message to the portal master system, wherein the message needs to carry information about all ports with repeated IDs, and a specific format is as follows:

| Type | Length | Portal system ID | Aggregation port ID | | Local aggregation port ID | | Local aggregation port ID | |
|---|---|---|---|---|---|---|---|---|
| 0x3 | Length | B | Priority | 2 | Priority | Port B | Priority | Port F |

After receiving the error indication message, the portal master system reallocates the aggregation port ID, and executes S706.
S714: the disconnection of an is processed.

When the between the portal master system and the portal slave system is disconnected, if the portal slave system is isolated, the portal master system in an aggregate state reserves the aggregation port ID of its aggregation port, and simultaneously deletes a corresponding relationship between the corresponding local aggregation port ID and the aggregation port ID; and if the portal master system is isolated, the portal slave systems renegotiates to determine another portal master system to reallocate aggregation port IDs to the aggregation ports of the portal systems in the aggregate state.

### Embodiment 8

The system structure diagram of the embodiment is as shown in Fig. 7a, a logic portal system at one end of an link aggregation group consists of two portal systems A and B which are not distinguished as a master and a slave, and portal system IDs of the portal systems A and B have been allocated or negotiated in advance. It is supposed that the portal system ID of the portal system A is 0 and the portal system ID of the portal system B is 1. The portal systems A and B are connected through an IPL, thereby forming one end of the distributed link aggregation group, and similarly, two portal systems C and D form the other end of the link aggregation group. The portal system A is connected with the portal system C through port A, and a link between the portal systems A and C is link 1; and the portal system B is connected with the portal system D through port B, and a link between the portal systems B and D is link 2.

Fig. 8 is a fourth flowchart of a method for allocating aggregation port ID provided by a preferred embodiment of the present invention, and as shown in Fig. 8, the flow includes the following steps.
S802: the portal system A allocates an aggregation port ID to its aggregation port.

The portal master system A allocates an aggregation port ID to port A, which is added into a link aggregation group, of the portal master system A, and allocated aggregation port ID information is as follows:

| Aggregation port ID | | |
|---|---|---|
| 2 bytes | 3 bits | 13 bits |
| Priority | 0 | Port A |

The aggregation port ID consists of an aggregation port priority, a portal system ID and an aggregation port number, wherein 3 high-order bits, i.e. 0 in the table, of the original aggregation port number form the portal system ID, and 13 low-order bits, i.e. Port A in the table, form the aggregation port number.
S804: the portal system A notifies allocation information to the other portal system.

The portal system A notifies the aggregation port ID allocation information to the portal system B, for example, a TLV format in the following table is adopted:

| Type | Length | Portal system ID | Aggregation port ID | | |
|---|---|---|---|---|---|
| 0x1 | Length | A | Priority | 0 | Port A |

When the portal slave system A simultaneously notifies multiple aggregation port IDs to the other portal system, the multiple aggregation port IDs may be simultaneously carried in a message.
S806: the portal system B allocates an aggregation port ID to its aggregation port.

The portal system B allocates the aggregation port ID to its port B added into the link aggregation group, and the allocated aggregation port ID information is as follows:

| Aggregation port ID | | |
|---|---|---|
| 2 bytes | 3 bits | 13 bits |
| Priority | 0 | Port B |

The specific formation of the aggregation port ID is the as that in S802, and will not be repeated here.
S808: the portal system B notifies allocation information to the portal system A.

The portal system B notifies the aggregation port ID allocation information to the portal system A, and the TLV format in the following table is adopted for a notification message:

| Type | Length | Aggregation port ID | | |
|---|---|---|---|---|
| 0x1 | Length | Priority | 0 | Port B |

When the portal system B simultaneously notifies multiple aggregation port IDs to the other portal system, the multiple aggregation port IDs may be simultaneously carried in the message.
S810: the disconnection of an is processed.

When the between the portal systems A and B is disconnected, the portal system still in an aggregate state keeps own portal system ID unchanged, and the portal system isolated from the link aggregation group changes own portal system ID to be a default value 0, and reallocates an port ID to its aggregation port.

The above two embodiments enumerate the aggregation port ID allocation processing flows for two portal systems in an link aggregation group, and processing flows for three portal systems and more portal systems are consistent with the enumerated processing flows, and may refer to the processing flows for the two portal systems.

From the above, it can be seen that the present invention achieves the following technical effects that: by the embodiments of the present invention, the unified allocation of the aggregation port IDs is realized in a portal system negotiation way or a portal system fixed allocation strategy, so that the uniqueness of the aggregation port IDs is ensured.

Obviously, those skilled in the art should know that each component or step of the embodiment of the present invention can be implemented by a universal computing device, and the components or steps can be concentrated on a single computing device or distributed on a network formed by a plurality of computing devices, and can optionally be implemented by programmable codes executable for the computing devices, so that the components or steps can be stored in a storage device for execution with the computing devices, or can form each integrated circuit component, or multiple components or steps therein can form a single integrated circuit component for implementation. As a consequence, the present invention is not limited to any specific hardware and software combination.

### Industrial Applicability

The technical solution provided by the embodiment of the present invention may be applied to the field of Ethernet link aggregation, the problems of aggregation port ID allocation are solved, and the unified allocation of aggregation port IDs is realized in a portal system negotiation way or by a portal system fixed allocation strategy to ensure the uniqueness of the aggregation port IDs.

## Claims

1. A method for allocating aggregation port Identifiers, ID, **characterized by** comprising:
a portal master system at one end of an link aggregation group allocating (S202) an aggregation port ID to an aggregation port of the portal master system, and allocating (S204) an aggregation port ID to a corresponding aggregation port of a portal slave system at the end of the link aggregation group according to an aggregation port ID allocation request from the portal slave system;
allocating, by a portal system at one end of an link aggregation group, an aggregation port ID to an aggregation port of the portal system according to a portal system ID and an aggregation port number.

2. The method according to claim 1, **characterized in that** after allocating the aggregation port ID to the corresponding aggregation port of the portal slave system, the method further comprises:
checking, by the portal slave system, whether the allocated aggregation port ID is valid or not, and notifying a check result to the portal master system.

3. The method according to claim 1 or 2, **characterized in that** before the portal master system at one end of the link aggregation group allocates the aggregation port ID to the aggregation port of the portal master system, the method further comprises:
negotiating, by multiple portal systems at the end of the link aggregation group, to determine the portal master system and at least one portal slave system; or
determining the portal master system and at least one portal slave system at the end of the link aggregation group according to pre-configuration.

4. The method according to claim 1, **characterized in that** allocating the aggregation port ID to the corresponding aggregation port of the portal slave system according to the aggregation port ID allocation request from the portal slave system comprises:
receiving, by the portal master system, the aggregation port ID allocation request from the portal slave system;
allocating, by the portal master system, the aggregation port ID to the corresponding aggregation port of the portal slave system according to the aggregation port ID allocation request; and
transmitting, by the portal master system, the allocated aggregation port ID to the portal slave system.

5. The method according to claim 4, **characterized in that** under a condition that the aggregation port ID allocation request carries a local aggregation port ID which is allocated to the aggregation port of the portal slave system by the portal slave system, transmitting, by the portal master system, the allocated aggregation port ID to the portal slave system comprises:
establishing a corresponding relationship between the allocated aggregation port ID and the local aggregation port ID; and
transmitting the allocated aggregation port ID and the corresponding relationship to the portal slave system.

6. The method according to any one of claims 1 to 5, **characterized in that** after allocating the aggregation port ID to the corresponding aggregation port of the portal slave system according to the aggregation port ID allocation request from the portal slave system, the method further comprises:
under a condition that an Intra-Portal Link, IPL, between the portal master system and the portal slave system is disconnected, based on that the portal slave system is isolated, reserving, by the portal systems in an aggregate state, an aggregation port ID of its aggregation port.

7. The method according to any one of claims 1 to 5, **characterized in that** after allocating the aggregation port ID to the corresponding aggregation port of the portal slave system according to the aggregation port ID allocation request from the portal slave system, the method further comprises:
under a condition that the between the portal master system and the portal slave system is disconnected, based on that the portal master system is isolated, renegotiating, by portal slave systems, to determine another portal master system to reallocate aggregation port IDs for portal systems in the aggregate state.

8. The method according to any one of claims 1 to 7, **characterized in that** after allocating the aggregation port ID to the corresponding aggregation port of the portal slave system according to the aggregation port ID allocation request from the portal slave system, the method further comprises:
receiving, by the portal master system, a port removal request from the portal slave system, wherein the port removal request carries an aggregation port ID to be removed; and
reclaiming, by the portal master system, the aggregation port ID to be removed according to the port removal request.

9. The method according to claim 1, **characterized in that** allocating, by the portal system at one end of the link aggregation group, the aggregation port ID to the aggregation port of the portal system according to the portal system ID and the aggregation port number comprises:
allocating, by the portal system at one end of the link aggregation group, the aggregation port ID to the aggregation port of the portal system according to a port priority, the portal system ID and the aggregation port number.

10. The method according to claim 1 or 9, **characterized in that** after allocating, by the portal system at one end of the link aggregation group, the aggregation port ID to the aggregation port of the portal system according to the portal system ID and the aggregation port number, the method further comprising:
notifying, by the portal system, the allocated aggregation port ID to other portal systems at the end of the link aggregation group.

11. A device for allocating aggregation port Identifiers, ID, **characterized by** comprising:
an allocation component (302) configured to allocate an aggregation port ID to an aggregation port of a portal master system at one end of an link aggregation group and allocate an aggregation port ID to a corresponding aggregation port of a portal slave system according to an aggregation port ID allocation request from the portal slave system at the end of the link aggregation group; and
a port ID allocation component (402) configured to allocate the aggregation port ID to an aggregation port of a portal system at one end of an link aggregation group according to a portal system ID and an aggregate port number.

12. The device according to claim 11, **characterized by** further comprising:
a processing component (304) configured to check whether the aggregation port ID allocated by the portal master system is valid or not and notify a check result to the portal master system.

13. The device according to claim 11 or 12, **characterized in that** the processing component (304) is further configured to, under a condition that the portal master system receives a port removal request from the portal slave system, reclaim an aggregation port ID to be removed according to the port removal request, wherein the port removal request carries the aggregation port ID to be removed.

14. The device according to claim 11, **characterized in that** the port ID allocation component (402) is further configured to allocate the aggregate port ID to the aggregation port of the portal system according to an aggregate port priority, the portal system ID and the aggregation port number.

15. The device according to claim 11 or 14, **characterized by** further comprising:
a notification component (404) configured to notify the allocated aggregation port ID to other portal systems at the end of the link aggregation group.

## Patentansprüche

1. Verfahren zum Zuweisen von Aggregationsportkennungen (Aggregationsport-IDs), **dadurch gekennzeichnet, dass** es umfasst:
durch ein Portal-Mastersystem an einem Ende einer Verbindungsaggregationsgruppe durchgeführtes Zuweisen (S202)
einer Aggregationsport-ID an einen Aggregationsport des Portal-Mastersystems und Zuweisen (S204)
einer Aggregationsport-ID an einen entsprechenden Aggregationsport eines Portal-Slavesystems am Ende der Verbindungsaggregationsgruppe gemäß einer Aggregationsport-ID-Zuweisungsanforderung vom Portal-Slavesystem;
durch ein Portalsystem an einem Ende einer Verbindungsaggregationsgruppe durchgeführtes Zuweisen einer Aggregationsport-ID an einen Aggregationsport des Portalsystems gemäß einer Portalsystem-ID und einer Aggregationsportnummer.

2. Verfahren nach Anspruch 1, **dadurch gekennzeichnet, dass** das Verfahren nach dem Zuweisen der Aggregationsport-ID an den entsprechenden Aggregationsport des Portal-Slavesystems ferner umfasst:
durch das Portal-Slavesystem durchgeführtes Prüfen, ob die zugewiesene Aggregationsport-ID gültig ist, und Benachrichtigen des Portal-Mastersystems über ein Prüfergebnis.

3. Verfahren nach Anspruch 1 oder 2, **dadurch gekennzeichnet, dass** das Verfahren vor dem durch das Portal-Mastersystem an einem Ende der Verbindungsaggregationsgruppe durchgeführten Zuweisen der Aggregationsport-ID an den Aggregationsport des Portal-Mastersystems ferner umfasst:
durch mehrere Portalsysteme am Ende der Verbindungsaggregationsgruppe durchgeführtes Aushandeln zum Ermitteln des Portal-Mastersystems und mindestens eines Portal-Slavesystems; oder
Ermitteln des Portal-Mastersystems und mindestens eines Portal-Slavesystems am Ende der Verbindungsaggregationsgruppe gemäß einer Voreinstellung.

4. Verfahren nach Anspruch 1, **dadurch gekennzeichnet, dass** das Verfahren nach dem Zuweisen der Aggregationsport-ID an den entsprechenden Aggregationsport des Portal-Slavesystems ferner umfasst:
durch das Portal-Mastersystem durchgeführtes Empfangen der Aggregationsport-ID-Zuweisungsanforderung vom Portal-Slavesystem;
durch das Portal-Mastersystem durchgeführtes Zuweisen der Aggregationsport-ID an den entsprechenden Aggregationsport des Portal-Slavesystems gemäß der Aggregationsport-ID-Zuweisungsanforderung; und
durch das Portal-Mastersystem durchgeführtes Übertragen der zugewiesenen Aggregationsport-ID an das Portal-Slavesystem.

5. Verfahren nach Anspruch 4, **dadurch gekennzeichnet, dass** unter einer Voraussetzung, dass die Aggregationsport-ID-Zuweisungsanforderung eine lokale Aggregationsport-ID enthält, die durch das Portal-Slavesystem dem Aggregationsport des Portal-Slavesystems zugewiesen wurde, das durch das Portal-Mastersystem durchgeführte Übertragen der zugewiesenen Aggregationsport-ID an das Portal-Slavesystem umfasst:
Aufbauen einer entsprechenden Beziehung zwischen der zugewiesenen Aggregationsport-ID und der lokalen Aggregationsport-ID; und
Übertragen der zugewiesenen Aggregationsport-ID und der entsprechenden Beziehung an das Portal-Slavesystem.

6. Verfahren nach Anspruch 1 bis 5, **dadurch gekennzeichnet, dass** das Verfahren nach dem Zuweisen der Aggregationsport-ID an den entsprechenden Aggregationsport des Portal-Slavesystems ferner umfasst:
unter einer Voraussetzung, dass eine portalinterne Verbindung (Intra-Portal Link, IPL) zwischen dem Portal-Mastersystem und dem Portal-Slavesystem getrennt ist, auf der Grundlage, dass das Portal-Slavesystem isoliert ist, durch die in einem aggregierten Zustand befindlichen Portalsysteme durchgeführtes Reservieren einer Aggregationsport-ID seines Aggregationsports.

7. Verfahren nach Anspruch 1 bis 5, **dadurch gekennzeichnet, dass** das Verfahren nach dem Zuweisen der Aggregationsport-ID an den entsprechenden Aggregationsport des Portal-Slavesystems ferner umfasst:
unter einer Voraussetzung, dass die IPL zwischen dem Portal-Mastersystem und dem Portal-Slavesystem getrennt ist, auf der Grundlage, dass das Portal-Mastersystem isoliert ist, durch Portal-Slavesysteme durchgeführtes erneutes Aushandeln zum Ermitteln eines anderen Portal-Mastersystems zum erneuten Zuweisen von Aggregationsport-IDs für Portalsysteme, die sich im aggregierten Zustand befinden.

8. Verfahren nach Anspruch 1 bis 7, **dadurch gekennzeichnet, dass** das Verfahren nach dem Zuweisen der Aggregationsport-ID an den entsprechenden Aggregationsport des Portal-Slavesystems ferner umfasst:
durch das Portal-Mastersystem durchgeführtes Empfangen einer Portentfernungsanforderung vom Portal-Slavesystem, wobei die Portentfernungsanforderung eine zu entfernende Aggregationsport-ID enthält; und
durch das Portal-Mastersystem durchgeführtes Zurückfordern der Aggregationsport-ID-Zuweisungsanforderung vom Portal-Slavesystem.

9. Verfahren nach Anspruch 1, **dadurch gekennzeichnet, dass** das durch das Portalsystem an einem Ende einer Verbindungsaggregationsgruppe durchgeführte Zuweisen der Aggregationsport-ID an den Aggregationsport des Portalsystems gemäß der Portalsystem-ID und der Aggregationsportnummer umfasst:
durch das Portalsystem an einem Ende einer Verbindungsaggregationsgruppe durchgeführtes Zuweisen der Aggregationsport-ID an den Aggregationsport des Portalsystems gemäß der Portalsystem-ID und der Aggregationsportnummer.

10. Verfahren nach Anspruch 1 oder 9, **dadurch gekennzeichnet, dass** nach dem Zuweisen der Aggregationsport-ID an den Aggregationsport des Portalsystems gemäß der Portalsystem-ID und der Aggregationsportnummer durch das Portalsystem an einem Ende der Verbindungsaggregationsgruppe das Verfahren ferner umfasst:
durch das Portalsystem durchgeführtes Benachrichtigen von anderen Portalsystemen am Ende der Verbindungsaggregationsgruppe über die zugewiesene Aggregationsport-ID.

11. Vorrichtung zum Zuweisen von Aggregationsportkennungen (Aggregationsport-IDs), **dadurch gekennzeichnet, dass** sie umfasst:
eine Zuweisungskomponente (302), die eingerichtet ist, um eine Aggregationsport-ID einem Aggregationsport eines Portal-Mastersystems an einem Ende einer Verbindungsaggregationsgruppe zuzuweisen und eine Aggregationsport-ID einem entsprechenden Aggregationsport eines Portal-Slavesystems gemäß einer Aggregationsport-ID-Zuweisungsanforderung vom Portal-Slavesystem am Ende der Verbindungsaggregationsgruppe zuzuweisen; und
eine Port-ID-Zuweisungskomponente (402), die eingerichtet ist, um die Aggregationsport-ID einem Aggregationsport eines Portalsystems an einem Ende einer Verbindungsaggregationsgruppe gemäß einer Portalsystem-ID und einer Aggregatportnummer zuzuweisen.

12. Vorrichtung nach Anspruch 11, **dadurch gekennzeichnet, dass** sie ferner umfasst:
eine Verarbeitungskomponente (304), die eingerichtet ist, um zu prüfen, ob die durch das Portal-Mastersystem zugewiesene Aggregationsport-ID gültig ist, und das Portal-Mastersystem über ein Prüfergebnis zu benachrichtigen.

13. Vorrichtung nach Anspruch 11 oder 12, **dadurch gekennzeichnet, dass** die Verarbeitungskomponente (304) ferner eingerichtet ist, um unter einer Voraussetzung, dass das Portal-Mastersystem eine Portentfernungsanforderung vom Portal-Slavesystem empfängt, eine gemäß der Portentfernungsanforderung zu entfernende Aggregationsport-ID zurückzufordern, wobei die Portentfernungsanforderung die zu entfernende Aggregationsport-ID enthält.

14. Vorrichtung nach Anspruch 11, **dadurch gekennzeichnet, dass** die Port-ID-Zuweisungskomponente (402) ferner eingerichtet ist, um die Aggregationsport-ID an den Aggregationsport des Portalsystems gemäß einer Aggregationportpriorität, der Portalsystem-ID und der Aggregationsportnummer zuzuweisen.

15. Vorrichtung nach Anspruch 11 oder 14, **dadurch gekennzeichnet, dass** sie ferner aufweist:
eine Benachrichtigungskomponente (404), die eingerichtet ist, um die anderen Portalsysteme am Ende der Verbindungsaggregationsgruppe über die zugewiesene Aggregationsport-ID zu benachrichtigen.

## Revendications

1. Procédé d'attribution d'identifiants (ID) de ports d'agrégation **caractérisé en ce qu'**il comprend :
un système maître de portail au niveau d'une extrémité d'un groupe d'agrégation de liens attribuant (S202)
un ID de port d'agrégation à un port d'agrégation du système maître de portail et attribuant (S204)
un ID de port d'agrégation à un port d'agrégation correspondant d'un système esclave de portail au niveau de l'extrémité du groupe d'agrégation de liens selon une demande d'attribution d'ID de port d'agrégation provenant du système esclave de portail;
une attribution, par un système de portail au niveau d'une extrémité d'un groupe d'agrégation de liens, d'un ID de port d'agrégation à un port d'agrégation du système de portail selon un ID de système de portail et un numéro de port d'agrégation.

2. Procédé selon la revendication 1, **caractérisé en ce qu'**après l'attribution de l'ID de port d'agrégation au port d'agrégation correspondant du système esclave de portail, le procédé comprend en outre :
la vérification, par le système esclave de portail, du fait que l'ID de port d'agrégation attribué est valide ou non et la notification d'un résultat de vérification au système maître de portail.

3. Procédé selon la revendication 1 ou 2, **caractérisé en ce qu'**avant que le système maître de portail au niveau d'une extrémité du groupe d'agrégation de liens n'attribue l'ID de port d'agrégation au port d'agrégation du système maître de portail, le procédé comprend en outre :
la négociation, par de multiples systèmes de portail au niveau de l'extrémité du groupe d'agrégation de liens, pour déterminer le système maître de portail et au moins un système esclave de portail ; ou
la détermination du système maître de portail et d'au moins un système esclave de portail au niveau de l'extrémité du groupe d'agrégation de liens selon une pré-configuration.

4. Procédé selon la revendication 1, **caractérisé en ce qu'**une attribution de l'ID de port d'agrégation au port d'agrégation correspondant du système esclave de portail selon la demande d'attribution d'ID de port d'agrégation provenant du système esclave de portail comprend :
la réception, par le système maître de portail, de la demande d'attribution d'ID de port d'agrégation provenant du système esclave de portail;
l'attribution, par le système maître de portail, de l'ID de port d'agrégation au port d'agrégation correspondant du système esclave de portail selon la demande d'attribution d'ID de port d'agrégation ; et
la transmission, par le système maître de portail, de l'ID de port d'agrégation attribué vers le système esclave de portail.

5. Procédé selon la revendication 4, **caractérisé en ce que**, dans une condition telle que la demande d'attribution d'ID de port d'agrégation porte un ID de port d'agrégation local qui est attribué au port d'agrégation du système esclave de portail par le système esclave de portail, la transmission, par le système maître de portail, de l'ID de port d'agrégation attribué vers le système esclave de portail comprend :
l'établissement d'une relation correspondante entre l'ID de port d'agrégation attribué et l'ID de port d'agrégation local ; et
la transmission de l'ID de port d'agrégation attribué et de la relation correspondante vers le système esclave de portail.

6. Procédé selon l'une quelconque des revendications 1 à 5, **caractérisé en ce qu'**après l'attribution de l'ID de port d'agrégation au port d'agrégation correspondant du système esclave de portail selon la demande d'attribution d'ID de port d'agrégation provenant du système esclave de portail, le procédé comprend en outre :
dans une condition telle qu'un lien intra-portail (IPL) entre le système maître de portail et le système esclave de portail est déconnecté, sur la base du fait que le système esclave de portail est isolé, la réservation, par les systèmes de portail dans un état agrégé, d'un ID de port d'agrégation de son port d'agrégation.

7. Procédé selon l'une quelconque des revendications 1 à 5, **caractérisé en ce qu'**après l'attribution de l'ID de port d'agrégation au port d'agrégation correspondant du système esclave de portail selon la demande d'attribution d'ID de port d'agrégation provenant du système esclave de portail, le procédé comprend en outre :
dans une condition telle que l'IPL entre le système maître de portail et le système esclave de portail est déconnecté, sur la base du fait que le système maître de portail est isolé, la re-négociation, par des systèmes esclaves de portail, pour déterminer un autre système maître de portail afin de ré-attribuer des ID de ports d'agrégation pour des systèmes de portail dans l'état agrégé.

8. Procédé selon l'une quelconque des revendications 1 à 7, **caractérisé en ce qu'**après l'attribution de l'ID de port d'agrégation au port d'agrégation correspondant du système esclave de portail selon la demande d'attribution d'ID de port d'agrégation provenant du système esclave de portail, le procédé comprend en outre :
la réception, par le système maître de portail, d'une demande de retrait de port provenant du système esclave de portail, dans lequel la demande de retrait de port porte un ID de port d'agrégation à retirer ; et
la ré-appropriation, par le système maître de portail, de l'ID de port d'agrégation à retirer selon la demande de retrait de port.

9. Procédé selon la revendication 1, **caractérisé en ce que** l'attribution, par le système de portail au niveau d'une extrémité du groupe d'agrégation de liens, de l'ID de port d'agrégation au port d'agrégation du système de portail selon l'ID de système de portail et le numéro de port d'agrégation comprend :
l'attribution, par le système de portail au niveau d'une extrémité du groupe d'agrégation de liens, de l'ID de port d'agrégation au port d'agrégation du système de portail selon une priorité de port, l'ID de système de portail et le numéro de port d'agrégation.

10. Procédé selon la revendication 1 ou 9, **caractérisé en ce qu'**après l'attribution, par le système de portail au niveau d'une extrémité du groupe d'agrégation de liens, de l'ID de port d'agrégation au port d'agrégation du système de portail selon l'ID de système de portail et le numéro de port d'agrégation, le procédé comprend en outre :
la notification, par le système de portail, de l'ID de port d'agrégation attribué à d'autres systèmes de portail au niveau de l'extrémité du groupe d'agrégation de liens.

11. Dispositif d'attribution d'identifiants (ID) de ports d'agrégation **caractérisé en ce qu'**il comprend :
un composant d'attribution (302) configuré pour attribuer un ID de port d'agrégation à un port d'agrégation d'un système maître de portail au niveau d'une extrémité d'un groupe d'agrégation de liens et attribuer un ID de port d'agrégation à un port d'agrégation correspondant d'un système esclave de portail selon une demande d'attribution d'ID de port d'agrégation provenant du système esclave de portail au niveau de l'extrémité du groupe d'agrégation de liens ; et
un composant d'attribution d'ID de port (402) configuré pour attribuer l'ID de port d'agrégation à un port d'agrégation d'un système de portail au niveau d'une extrémité d'un groupe d'agrégation de liens selon un ID de système de portail et un numéro de port d'agrégation.

12. Dispositif selon la revendication 11, **caractérisé en ce qu'**il comprend en outre un composant de traitement (304) configuré pour vérifier si l'ID de port d'agrégation attribué par le système maître de portail est valide ou non et notifier un résultat de vérification au système maître de portail.

13. Dispositif selon la revendication 11 ou 12, **caractérisé en ce que** le composant de traitement (304) est en outre configuré pour, dans une condition telle que le système maître de portail reçoit une demande de retrait de port provenant du système esclave de portail, se ré-approprier un ID de port d'agrégation à retirer selon la demande de retrait de port, dans lequel la demande de retrait de port porte l'ID de port d'agrégation à retirer.

14. Dispositif selon la revendication 11, **caractérisé en ce que** le composant d'attribution d'ID de port (402) est en outre configuré pour attribuer l'ID de port agrégé au port d'agrégation du système de portail selon une priorité de port agrégé, l'ID de système de portail et le numéro de port d'agrégation.

15. Dispositif selon la revendication 11 ou 14, **caractérisé en ce qu'**il comprend en outre :
un composant de notification (404) configuré pour notifier l'ID de port d'agrégation attribué à d'autres systèmes de portail au niveau de l'extrémité du groupe d'agrégation de liens.
